# EUROPÄISCHE PATENTSCHRIFT

(11) **EP 1 792 126 B1**
(45) Veröffentlichungstag und Bekanntmachung des Hinweises auf die Patenterteilung: **22.04.2009**
(21) Anmeldenummer: 05776438.3
(22) Anmeldetag: 02.09.2005
(51) Int. Cl.: F24D 3/18

(54) **VORRICHTUNG ZUR WÄRMEZU- UND/ODER -ABFUHR ZU ZUMINDEST EINEM VERBRAUCHER**
DEVICE FOR SUPPLYING HEAT TO AT LEAST ONE CONSUMER AND/OR CARRYING HEAT AWAY FROM THE SAME
DISPOSITIF POUR FOURNIR DE LA CHALEUR A AU MOINS UN RECEPTEUR ET EVACUER DE LA CHALEUR DE CE RECEPTEUR

(30) Priorität: 02.09.2004 EP 04450169
(43) Veröffentlichungstag der Anmeldung: 06.06.2007
(73) Patentinhaber: Solkav Alternative Energie Systeme GmbH, A-3150 Wilhelmsburg (AT)
(72) Erfinder: KIRNICH, Walter, A-1210 Wien (AT)
(74) Vertreter: Babeluk, Michael
(86) Internationale Anmeldenummer: PCT/AT2005/000354
(87) Internationale Veröffentlichungsnummer: WO 2006/024065

(56) Entgegenhaltungen:
- DE-A1- 2 909 321
- DE-A1- 2 936 656
- DE-U1- 9 410 207
- FR-A- 2 548 769
- US-A- 5 788 149

## Beschreibung

Die Erfindung betrifft eine Vorrichtung zur Wärmezu- und/oder -abfuhr zu zumindest einem Verbraucher, wie beispielsweise einem Schwimmbecken, einer Raumheizanlage und/oder Raumklimatisierungsanlage, gemäß dem Oberbegriff von Patentanspruch 1.

Bei Wärmepumpen wird die Eintrittstemperatur des Wärmeträgers in den Verdampfer auf eine Maximaltemperatur begrenzt, um eine Überhitzung des Kältemittels in der Wärmepumpe und somit Beschädigungen der Wärmepumpe zu verhindern. In der Regel wird dies durch Verfahren zur Energiegewinnung mit weniger hohen Temperatur (z.B. Energie aus Erdwärme) und/oder durch Abschalten der Wärmepumpe bewerkstelligt.

Aus der DE 29 36 656 A1 ist eine Heizungsanlage mit einer Wärmepumpe bekannt, deren Verdampfer von einem Sonnenkollektor über ein in einem geschlossenen Zwischenkreislauf umlaufendes Wärmeträgermediurn gespeist ist und deren Antriebsmotor durch aus dem Verdampfer angesaugtes, dampfförmiges Kältemittel gekühlt ist. Der Zwischenkreislauf weist eine der Sonnenkollektor umgehende Bypassleitung auf, welche in Abhängigkeit der Temperatur des Wärmeträgermediums im Zulauf zum Verdampfer derart gesteuert ist, dass oberhalb einer vorgegebenen Temperatur mindestens ein Teil des aus dem Verdampfer austretenden, bereits abgekühlten Wärmeträgermediums dem Zulauf des Verdampfers unter Umgehung des Sonnenkollektors direkt zugeführt wird. Der Sonnenkollektor ist als Einleitungskollektorsystem ausgeführt, wodurch Verbraucher im wesentlichen nur mit einem Temperaturniveau versorgt werden können.

Eine ähnliche Lösung ist in der US 5,788,149 A offenbart.

Wärmepumpen können auch zur Erzeugung von Kälte, z.B. für Raumklimaanlagen verwendet werden, wobei die dabei entstehende Abwärme- über so genannte Rückkühler abgeführt wird. Eine zwischengeschaltete Rückgewinnung dieser Abwärme gilt als Stand der Technik. Speziell in besiedettem Gebiet ist die Lärmbelästigung durch externe Rückkühler störend, zumeist in des Nacht, wo zu wenig Bedarf an Wärmeenergie besteht, um die Abwärme anderwärtig zu benutzen. Extrem leise Rückkühler sind in der Regel sehr groß und noch dazu sehr teuer in der Anschaffung.

Aufgabe der Erfindung ist es, mehr als ein Temperaturniveau zur Verfügung zu stellen. Eine weitere Aufgabe der Erfindung ist es, das System effektiv vor Überhitzung zu schützen.

Erfindungsgemäß erfolgt die Lösung dieser Aufgaben durch die Merkmale von Patentanspruch 1.

Ein Kondensatorkreislauf kann dabei den Kondensator der Wärmepumpe über eine Vorlaufleitung und eine Rücklaufleitung mit einem oder mehreren Verbrauchern verbinden. Um auf einfache Weise mehrere Verbraucher über die Wärmepumpe zu versorgen, kann ein Wärmetauscher vorgesehen sein, der den Kondensatorkreislauf mit zumindest einem Verbraucherkreislauf verbindet. Alternativ dazu ist es auch möglich, dass zumindest ein Verbraucherkreisiauf über Vorlauf- und Rücklaufleitungen direkt mit dem Kondensator der Wärmepumpe verbunden ist.

Die Absorbierkreisläufe können auch über Mischventile oder dergleichen miteinander verbindbar sein, solange eine Möglichkeit der Abkopplung besteht.

Vorzugsweise wird die Umschaltung zwischen Solarkreislauf und Kondensatorkreislauf von der Außentemperatur und vom Bedarf des Verbrauchers geregelt. Auf diese Weise kann die zur Verfügung gestellte Wärmeenergie den jeweiligen Anforderungen angepasst werden.

Eine individuelle Steuerung der einzelnen Verbraucher kann durchgeführt werden, wenn den Verbrauchern Absperrventile vorgeschaltet sind. Weiters kann vorgesehen sein, dass in der Vorlaufleitung und in der Rücklaufleitung des Kondensatorkreislaufes Absperrventile zum Trennen der koridensatorseitigen Vorlauf- und Rücklaufabschnitte von den verbraucherseitigen Vorlauf- und Rücklaufabschnitten vorgesehen sind, und dass Absperrventile in der Vorlaufleitung und in der Rücklaufleitung des Verdampferkreislaufes zum Trennen der absorberseitigen Vorlauf- und Rücklaufabschnitte von den verdampferseitigen Vorlauf- und Rücklaufabschnitten vorgesehen sind, wobei die verbraucherseitigen Vorlauf- und Rücklaufleitungsabschnitte des Kondensatorkreislaufes über Umgehungsleitungen mit den verdampferseitigen Vor- und Rücklaufleitungsabschnitten des Verdampferkreislaufes der Wärmepumpe verbunden sind und die kondensatorseitigen Vorlauf- und Rücklaufleitungsabschnitte des Kondensatorkreislaufes über Rückkühlleitungen mit den absorberseitigen Vor- und Rücklaufleitungsabschnitten des Verdampferkreislaufes verbunden sind.

Um eine Überhitzung des Wärmetauschers zu vermeiden, wird über das in der Rücklaufleitung des Verdampferkreislaufes oder in der ersten Bypassleitung zwischen Vor- und Rücklaufleitung des Verdampferkreislaufes angeordnete erste Mischventil kälterer Wärmeträger aus der Rücklaufleitung der Vorlaufleitung zugemischt. Das erste Mischventil wird entsprechend der Temperatur des Wärmeträgers im Vorlaufleifiungsabschnitt des Verdampferkreislaufes geregelt. Das erste Mischventil kann dabei als Dreiwegventil oder als ein - in der Bypassleitung angeordnetes - Zweiwegventil ausgeführt sein.

Um den Überhitzungsschutz für die Wärmepumpe zu verbessern ist zumindest eine zusätzliche Überhitzungsschutzeinrichtung bzw. Überhitzungsschutzmaßnahme von Vorteil. Diese kann darin bestehen, dass die Rückkühlleitungen mit einer zusätzlichen Vorrichtung zur Abwärmevernichtung, insbesondere einem Glykolrückkühler, verbunden sind. Eine Aufteilung der abzugebenden Abwärmeenergie zwischen Solarabsorber und der zusätzlichen Vorrichtung zur Abwärmevernichtung wird mittels zumindest einem Absperrventil in der Rückkühlleitung und dem ersten Mischventil in Abhängigkeit von der Außentemperatur und der Temperatur des Wärmeträgers in der Vorlaufleitung der Rückkühlleitung geregelt. Zusätzlich oder alternativ dazu kann auch vorgesehen sein, dass als zusätzliche Überhitzungsschutzmaßnahme der verdampferseitige Vorlaufleitungsabschnitt des Verdampferkreislaufes, vorzugsweise über einen zweiten Wärmetauscher, mit zumindest einem Verbraucher verbunden wird.

Als zusätzliche Überhitzungsschutzeinrichtung können auch die verbraucherseitigen Vor- und Rücklaufleitungsabschnitte des Kondensatorkreisiaufes mit der Vorlaufleitung des Kondensatorkreislaufes über eine zweite Bypassleitung verbunden sein, wobei ein zweites Mischventil, insbesondere im Rücklaufleitungsabschnitt, vorgesehen sein kann, mit dem kälterer Wärmeträger aus dem Rücklaufleitungsabschnitt dem Vorlaufleitungsabschnitt beigemischt werden kann. Auch dieses zweite Mischventil kann entsprechend der Temperatur des Wärmeträgers in der Vorlaufleitung des Kondensatorkreislaufes geregelt werden.

Als weitere zusätzliche Überhitzungsschutzmaßnahme kann die Fördermenge der Pumpe des Verdampferkreislaufes und/oder der Pumpe des Kondensatorkreislaufes, vorzugsweise in Abhängigkeit von der Außentemperatur, mit steigender Temperatur des Wärmeträgers in der Vorlaufleitung erhöht werden.

Zumindest ein Verbraucher kann sowohl mit dem Solarkreislauf, als auch über einen Verbraucherkreislauf und gegebenenfalls über den Kondensatorkreislauf mit der Wärmepumpe verbunden sein.

Bei hohem Wärmeangebot durch die Sonnenstrahlung werden die Absperrventile des Solarkreislauf geöffnet. Reicht das Wärmeangebot durch die einfallende Sonnenstrahlung nicht aus, so werden - alternativ oder zusätzlich - die Absperrventile des Kondensatorkreislaufes und/oder des Verbraucherkreislaufes geöffnet, wodurch der Kondensatorkreislauf in Betrieb geht.

Im Falle eines ausreichenden Wärmeeintrages durch Sonnenstrahlung kann auch zur Direktnutzung des Absorbers bei abgeschalteter Wärmepumpe der Verdampferkreislauf über eine Umgehungsleitung mit dem Kondensatorkreislauf verbunden werden, wobei die verdampferseitige Absperrventile im Verdampferkreislauf geschlossen und Absperrventile in der Umgehungsleitung geöffnet werden.

Wenn der direkte Solarertrag für den Verbraucher ausreichend ist und/oder zu bestimmten Tageszeiten, wird die Wärmepumpe abgeschattet und über eine Umgehungsleitung wird die Wärmeenergie aus dem Solarabsorber direkt dem Verbraucher zugeführt, wobei wahlweise ein Wärmetauscher zwischengeschaltet werden kann.

Bei Einsatz einer Klimaanlage kann deren die Wärme über einen Kreislauf, der aus Vor- und Rücklaufleitung der Klimaanlage, aus verbraucherseitigen Vor- und Rücklaufleitungsabschnitten, aus Umgehungsleitungen und den verdampferseitigen Vor- und Rücklaufleitungsabschnitten besteht, dem Verdampfer der Wärmepumpe zugeführt werden. Durch hydraulische Umschaltung kann mit derselben Wärmepumpe eine Raumklimaanlage betrieben werden und die dabei entstehende Abwärme über die Solarabsorber an die Umwelt abgegeben werden.

Gemäß der vorliegenden Erfindung kann die bestehende Wärmepumpen, die zur Erzeugung von Wärmeenergie für z.B. Raumheizungen oder Schwimmbäder verwendet wird, als Kältemaschine für z.B. Raumklimaanlagen benutzt werden. In diesem Fall wird die Wärmeerzeugung eingestellt und der Kondensatorkreislauf mit dem Kühlregister der Klimaanlage verbunden und über eine Umgehungsleitung mit dem Verdampferkreislauf verbunden. Der Kondensatorkreislauf vor den Absperrventilen zur Umgehungsleitung wird über eine Rückkühlleitung mit dem Verdampferkreislauf/Absorberkreislauf verbunden um die Abwärme über die Solarabsorber an die Umwelt abzugeben. Falls aufgrund zu geringer Temperaturdifferenzen die Abwärme nicht vollständig abgeführt werden kann, wird ein externer Rückkühler oder ein anderer Wärmeenergie benötigender Verbraucher zugeschaltet.

Die Erfindung wird im folgenden an Hand der Figuren näher erläutert. Es zeigen schematisch:
- Fig. 1: eine erfindungsgemäße Vorrichtung in einer ersten Ausführungsvariante,
- Fig. 2: eine erfindungsgemäße Vorrichtung in einer zweiten Ausführungsvariante,
- Fig. 3: eine erfindungsgemäße Vorrichtung in einer dritten Ausführungs-variante,
- Fig. 4: eine erfindungsgemäße Vorrichtung in einer vierten Ausführungs-variante,
- Fig. 5: eine erfindungsgemäße Vorrichtung in einer fünften Ausführungs-variante.

Funktionsgleiche Bauteile sind in den Ausführungsvarianten mit gleichen Bezugszeichen versehen.

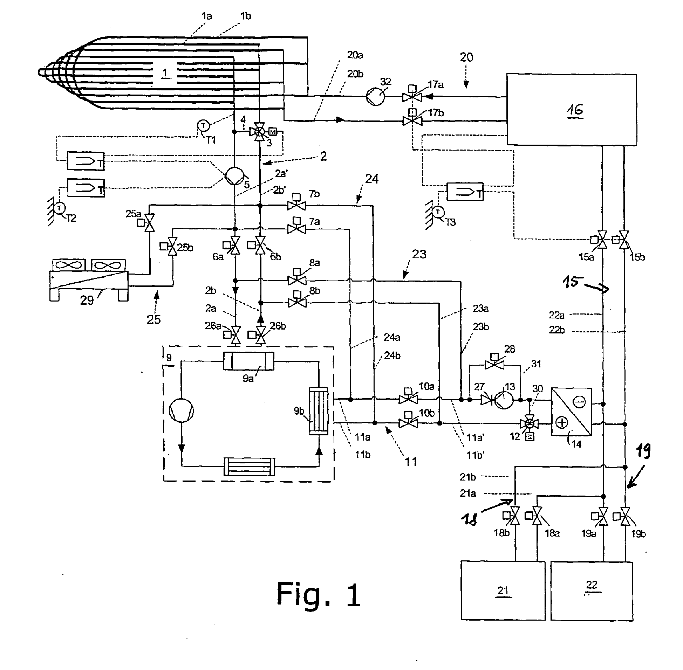

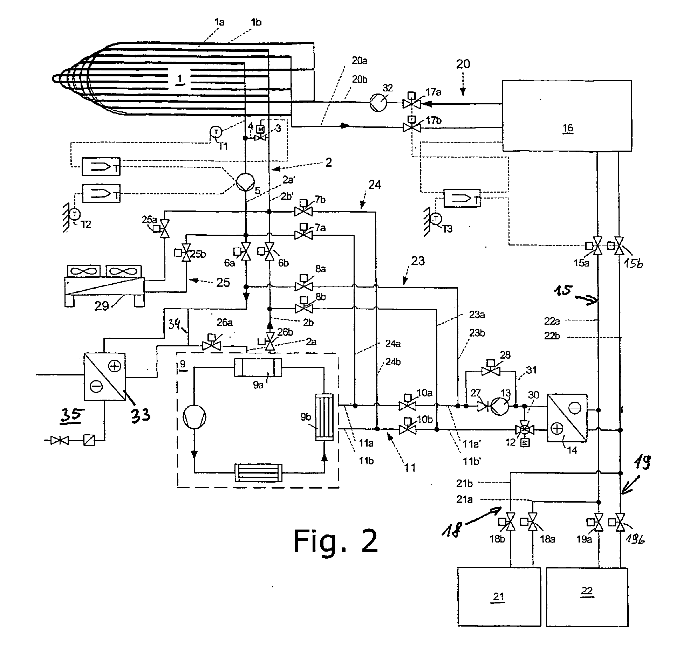

Fig. 1 zeigt eine Vorrichtung zur Wärmezu- und/oder -abfuhr zu Verbrauchern in einer ersten Ausführungsvariante. Bei der Wärmeproduktion wird die über die Solarabsorber 1 gewonnene Wärmeenergie mittels einer Pumpe 5 über die Vorlaufleitungsabschnitte 2a, 2a' des Verdampferkreislaufes 2 zum Verdampfer 9a der Wärmepumpe 9 geführt, wo Wärmenergie auf das Kaltemittel der Wärmepumpe 9 übertragen wird. Der abgekühlte Wärmeträger wird über den Rücklaufleitungsabschnitt 2b, 2b' des Verdampferkreislaufes 2 zurück in den Absorberkreislauf la geführt, wo wieder Wärmeenergie aufgenommen wird. Die Absperrventile 6a, 6b im Verdampferkreislauf 2 und die Absperrventile 26a, 26b am Verdampfer 9a sind geöffnet. Die Absperrventile 7a, 7b der Rückkühlleitung 24, die Absperrventile 8a, 8b der Umgehungsleitung 23 und die Absperrventile 25a, 25b der Zuleitung zum externen Rückkühler sind geschlossen. Ein erstes Mischventil 3, welches als Dreiwegventil oder als Zweiwegventil (Fig. 2) ausgeführt sein kann, reguliert die Temperatur des Wärmeträgers im Vorlaufleitungsabschnitte 2a, 2a' des Verdampferkreislaufes 2, indem kälterer Wärmeträger aus dem Rücklaufleitungsabschnitt 2b, 2b' des Verdampferkreislaufes 2 über eine erste Bypassleitung 4 in den Vorlaufleitungsabschnitt 2a, 2a' des Verdampferkreislaufes 2 gemischt wird, wobei die Steuerung des ersten Mischventils 3 über die Temperatur des Wärmeträgers im Vorlaufleitungsabschnitt 2a, 2a' des Verdampferkreislaufes 2 erfolgt. Der Kondensatorkreislauf 11 der Wärmepumpe 9 ist im gegenständlichen Fall an einen Wärmetauscher 14 angeschlossen, der wiederum ausgangsseitig die Verbraucher 16, 22, z.B. ein Schwimmbad und/oder eine Raumheizung, angeschlossen ist. Die Zirkulation des Wärmeträgers im Kondensatorkreislauf 11 erfolgt durch eine Pumpe 13. Die Absperrventile 10a, 10b im Kondensatorkreislauf 11 sind geöffnet, das Absperrventil 28 im Pumpenbypass 31 und das zweite Mischventil 12 zur zweiten Bypassleitung 30 sind geschlossen. Die Absperrventile 19a, 19b, 15a, 15b regeln die Aufteilung der Wärmeenergie zu den einzelnen Verbrauchern. Die Absperrventile 18a, 18b in der Zuleitung zum Verbraucher 18, z.B. Raumklimaanlage sind geschlossen. Die optimale Nutzung der im Solarabsorber 1 aufgenommenen Solarenergie wird durch die Durchflussmenge der Pumpe 5 geregelt, wobei diese durch die Temperatur des Wärmeträgers im Vorlaufleitungsabschnitt 2a, 2a' des Verdampferkreislaufes 2 und/ oder durch die Außentemperatur gesteuert wird.

Ist der Solarertrag des Solarabsorbers 1 ausreichend, um einen oder mehrere Verbraucher direkt zu versorgen, wird die Wärmepumpe 9 abgeschaltet, die Absperrventile 26a, 26b am Verdampfer 9a der Wärmepumpe 9 und das erste Mischventil 3 im Verdampferkreislauf 2 zur ersten Bypassleitung 4 hin geschlossen und die Absperrventile 8a, 8b der Umgehungsleitung 23 geöffnet. Im Kondensatorkreislauf 11 sind die Absperrventile 10a, 10b und das zweite Mischventil 12 zur zweiten Bypassleitung 30 hin geschlossen, das Absperrventil 28 im Pumpenbypass 31 wird geöffnet. Alle anderen Ventile bleiben in der vorher beschriebenen Stellung.

Der Solarabsorber 1 ist als Zweileitersystem ausgelegt, wobei ein Absorberkreislauf 1a mit dem Verdampferkreislauf 2 und der andere Absorberkreislauf 1b direkt mit dem Verbraucher 16 verbunden sind. Die Absperrventile 17a, 17b im Solarkreislauf 20 sind bei genügend Solarertrag geöffnet.

Wird die Wärmepumpe 9 zur Kälteproduktion eingesetzt, werden die Absperrventile 19a, 19b, 15a, 15b in den Zuleitungen zu den Verbrauchern 16, 22 geschlossen und die Ventile 18a, 18b des etwa durch eine Klimaanlage gebildeten Verbrauchers 21 geöffnet. Die Absperrventile 10a, 10b im Kondensatorkreislauf 11 und die Absperrventile 6a, 6b im Verdampferkreislauf 2 sind geschlossen, die Absperrventilen 8a, 8b der Umgehungsleitung und die Absperrventile 26a, 26b am Verdampfer 9a der Wärmepumpe 9 sind geöffnet. Über einen Wärmetauscher 14 wird der Verbraucher 21 mit dem verbraucherseitigen Vor- und Rücklaufleitungsabschnitt 11a', 11b' verbunden, wobei die Pumpe 1.3 im verbraucherseitigen Vorlaufleitungsabschnitt 11a' des Kondensatorkreislaufes 11 den Wärmeträger über die Umgehungsleitungen 23 und die verdampferseitigen Vor- und Rücklaufleitungsabschnitte 2a, 2b zum Verdampfer 9a der Wärmepumpe 9 fördert. Durch das zweite Mischventil 12 im verbraucherseitigen Rücklaufleitungsabschnitt 11b' des Kondensatorkreislaufes 11 wird durch Beimischung von kälterem Wärmeträger aus dem Rücklaufleitungsabschnitt 11b' über die zweite Bypassleitung 30 in den absorberseitigen Vorlaufleitungsabschnitt 11a' die Temperatur des Wärmeträgers geregelt, um eine Überhitzung des Kältemittels in der Wärmepumpe 9 zu verhindern. Die durch den Prozess der Wärmepumpe 9 entstehende Abwärme im Kondensator 9b der Wärmepumpe 9 wird über die kondensatorseitigen Vor- und Rücklaufleitungsabschnitte 11a, 11b, die Rückkühlleitungen 24 und den absorberseitigen Vor- und Rücklaufleitungsabschnitte 2a', 2b' des Verdampferkreislaufes 2 geleitet und im Absorberkreislauf 1a des Solarabsorbers 1 an die Umwelt abgegeben. Die Absperrventile 7a, 7b im Vor- und Rücklauf 24a, 24b der Rückkühlleitungen 24 sind geöffnet, die Absperrventile 25a, 25b sowie das erste Mischventil 3 im absorberseitigen Rücklaufleitungsabschnitt 2b' des Verdampferkreislaufes 2 steuern die Verteilung der abzuführenden Abwärme zwischen Solarabsorber 1 und dem externen Rückkühler 29.

In Fig. 2 ist als zusätzlicher Überhitzungsschutz für die Wärmepumpe 9 ein weiterer Wärmetauscher 33 über Vorlauf- und Rücklaufleituneaen 34a, 34b mit dem absorberseitigen Vorlaufleitungsabschnitt 2a des Verdampferkreislaufes 2 verbunden, wobei der Wärmetauscher 33 über eine Kurzschlussleitung 34 umgehbar ist. Die Wärmeenergie kann einem weiteren Verbraucher 35 zugeführt werden.

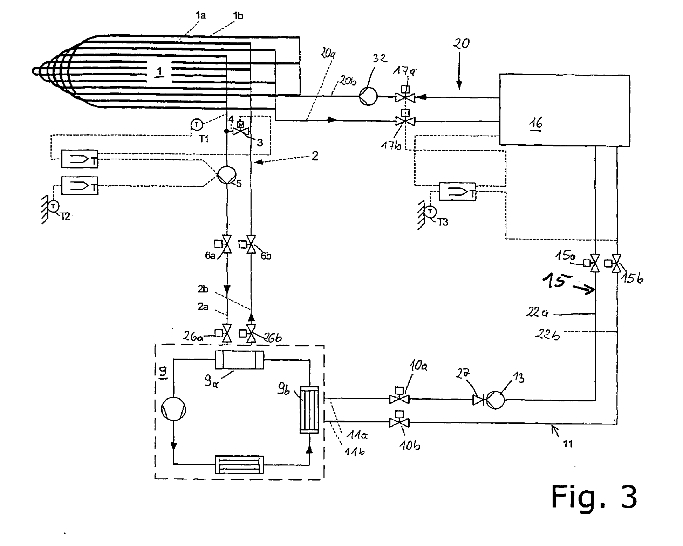

Die Fig. 3 bis Fig. 5 zeigen Ausführungsvarianten, bei denen der Verbraucherkreislauf 15 des zum Beispiel durch ein Schwimmbecken gebildeten Verbrauchers 16 direkt mit dem Kondensator 9b der Wärmepumpe 9 verbunden ist. Somit kann auf einen eigenen Kondensatorkreislauf verzichtet werden.

Fig. 3 zeigt eine einfache Ausführung, bei der der Verbraucher 16 wahlweise Wärme über den Solarkreis 20 und/oder über die Wärmepumpe bezieht. Weitere Verbraucher oder Kühlmaßnahmen sind nicht vorgesehen.

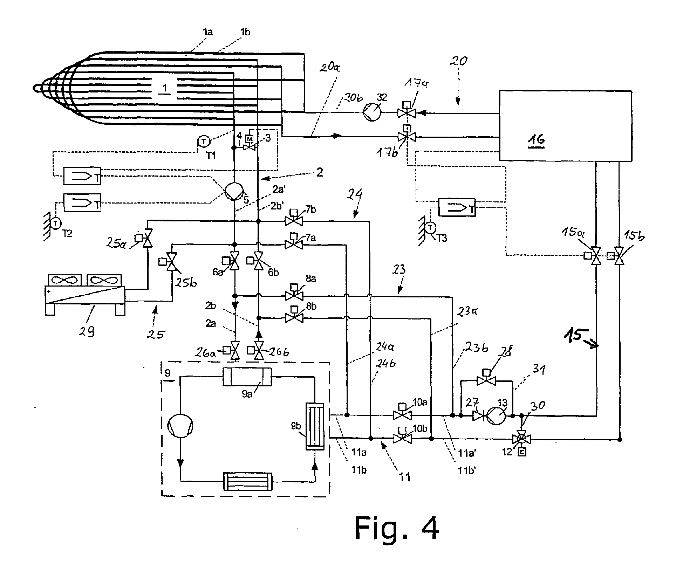

In Fig. 4 ist als Überhitzungsschutz ein externer Rückkühler 29 analog zu Fig. 1 vorgesehen. Weiters kann über Umgehungsleitungen der Verbraucherkreislauf 15 direkt unter Umgehung der Wärmepumpe 9 an den Verdampferkreislauf 2 angeschlossen werden.

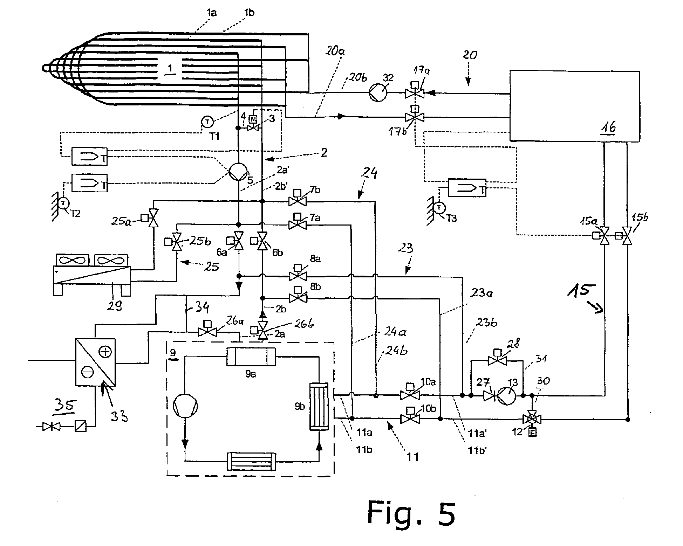

In der in Fig. 5 dargestellten Ausführungsvariante ist zusätzlich - analog zu Fig. 2 - ein weiterer Wärmetauscher 33 über Vorlauf- und Rücklaufleitungen 34a, 34b mit dem absorberseitigen Vorlaufleitungsabschnitt 2a des Verdampferkreislaufes 2 verbunden, wobei der Wärmetauscher 33 über eine Kurzschlussleitung 34 umgehbar ist.

Bei der beschriebenen Vorrichtung zur Wärmezu- und/oder -abfuhr zu Verbrauchern 16, 21, 22, 35 wie beispielsweise einem Schwimmbecken, einer Raumheizanlage und/oder Raumklimatisierungsanlage, bei der die Niedertemperatur-Solarabsorber 1 an eine Wärmepumpe 9 angebunden sind, kann die Wärmepumpe 9 durch hydraulische Umschaltungen als Kältemaschine zum Beispiel für Klimaanlagen oder zur herkömmlichen Wärmeerzeugung verwendet werden. Bei Kälteerzeugung kann die anfallende Abwärme zusätzlich üben die Solarabsorber 1 abgeführt werden. Bei ausreichender Wärmeenergie aus den Solarabsorbern 1 kann durch hydraulische Umschaltung die Wärmepumpe umgangen werden und die Wärmeenergie direkt dem Verbraucher 16, 21, 22 zugeführt werden.
- 1: Solarabsorber
- 1a: Absorberkreislauf
- 1b: Absorberkreislauf
- 2: Verdampferkreislauf
- 2a: verdampferseitiger Vorlaufleitungsabschnitt (Verdampferkreislauf)
- 2b: verdampferseitiger Rücklaufleitungsabschnitt (Verdampferkreislauf)
- 2a': absorberseitiger Vorlaufleitungsabschnitt (Verdampferkreislauf)
- 2b': absorberseitiger Rücklaufleitungsabschnitt (Verciampferkreislauf)
- 3: erstes Mischventil
- 4: erste Bypassleitung
- 5: Förderpumpe (Verdampferkreislauf)
- 6a, 6b: Absperrventile (Verdampferkreislauf)
- 7a, 7b: Absperrventile (Rückkühlleitung)
- 8a, 8b: Absperrventile (Umgehungsleitung)
- 9: Wärmepumpe
- 9a: Verdampfer
- 9b: Kondensator
- 10a, 10b: Absperrventile (Kondensatorkreislauf)
- 11: Kondensatorkreislauf
- 11a: kondensatorseitiger Vorlaufleitungsabschnitt (Kondensatorkreislaufes)
- 11b: kondensatorseitiger Rücklaufleitungsabschnitt (Kondensatorkreislauf)
- 11a': verbraucherseitiger Vorlaufleitungsabschnitt (Kondensatorkreislauf)
- 11b': verbraucherseitiger Rücklaufleitungsabschnitt (Kondensatorkreislauf)
- 12: zweites Mischventil (Kondensatorkreislauf)
- 13: Förderpumpe (Kondensatorkreislauf)
- 14: Wärmetauscher
- 15: Verbraucherkreislauf
- 15a, 15b: Absperrventil (Verbraucher 1)
- 16: Verbraucher 1
- 17a, 17b: Absperrventil (Solarkreislauf)
- 18: Verbraucherkreislauf
- 18a, 18b: Absperrventil (Verbraucher 2
- 19: Verbraucherkreislauf
- 19a, 19b: Absperrventil (Verbraucher 3)

- 20: Solarkreislauf
- 20a: Solarkreislauf Vorlauf
- 20b: Solarkreislauf Rücklauf
- 21: Verbraucher 2
- 21a: Zuleitung Verbraucher 2 - Vorlauf
- 21a: Zuleitung Verbraucher 2 - Rücklauf
- 22: Verbraucher 3
- 22a: Zuleitung Verbraucher - Vorlauf
- 22a: Zuleitung Verbraucher - Rücklauf
- 23: Umgehungsleitung
- 23a: Umgehungsleitung Vorlauf
- 23b: Umgehungsleitung Rücklauf
- 24: Rückkühlleitung
- 24a: Rückkühlleitung Vorlauf
- 24b: Rückkühlleitung Rücklauf
- 25: Zuleitung externer Rückkühler
- 25a, 25b: Absperrventil Zuleitung externer Rückkühler
- 26a, 26b: Absperrventil Verdampfer
- 27: Rückschlagklappe
- 28: Absperrventil Pumpenbypass
- 29: externer Rückkühler
- 30: zweite Bypassleitung (verbraucherseitiger Kondensatorkreislauf)
- 31: Pumpenbypass
- 32: Förderpumpe Solarkreislauf
- 33: Wärmetauscher
- 34: Kurzschlussleitung
- 35: Verbraucher 4
- T1: Temperaturfühler
- T2, T3: Außentemperaturfühler

## Patentansprüche

1. Vorrichtung zur Wärmezu- und/oder -abfuhr zu zumindest einem Verbraucher (16, 22, 21), wie beispielsweise einem Schwimmbecken, einer Raumheizanlage und/oder Raumklimatisierungsanlage, mit zumindest einem Solarabsorber (1) mit zumindest einem einen flüssigen Wärmeträger führenden Absorberkreislauf (1a;1b), einer Wärmepumpe (9) und einem Verdampferkreislauf (2), der den Solarabsorber (1) mit einem Verdampfer (9a) der Wärmepumpe (9) verbindet, wobei im Verdampferkreislauf (2) eine Pumpe (5) vorgesehen ist, und wobei als Überhitzungsschutzeinrichtung ein Rücklaufleitungsabschnitt (2b) des Verdampferkreislaufes (2) mit einem Vorlaufleitungsabschnitt (2a) des Verdampferkreislaufes (2) über eine erste Bypassleitung (4) verbunden ist, wobei ein erstes Mischventil (3), insbesondere im Rücklaufleitungsabschnitt (2b) oder der ersten Bypassleitung (4), vorgesehen ist, mit dem kälterer Wärmeträger aus dem Rücklaufleitungsabschnitt (2b) dem Vorlaufleitungsabschnitt (2a) beigemischt werden kann, **dadurch gekennzeichnet, dass** zumindest zwei getrennte Absorberkreisläufe (1a, 1b) vorliegen, die mit unterschiedlichen oder gleichen Wärmeträgern zumindest einen Verbraucher, vorzugsweise zumindest zwei unterschiedliche Verbraucher, mit unterschiedlichen Temperaturen versorgen und dass ein Absorberkreislauf (1a) den Verdampferkreislauf (2) der Wärmepumpe (9) und der andere Absorberkreislauf (1b) einen Solarkreislauf (20) mit direkt angebundenen Verbrauchern (16) versorgt.

2. Vorrichtung nach Anspruch 1, **dadurch gekennzeichnet, dass** der Solarabsorber (1) als Mehrleitungsabsorber, vorzugsweise als Zweileitungsabsorber, ausgeführt ist.

3. Vorrichtung nach Anspruch 1 oder 2, **dadurch gekennzeichnet, dass** ein Kondensatorkreislauf (11) den Kondensator (9b) der Wärmepumpe (9) über zumindest eine Vorlaufleitung (11a, 11a', 21a, 22a) und zumindest eine Rücklaufleitung (11b, 11b', 21b, 22b) mit einem oder mehreren Verbrauchern (16, 21, 22) verbindet.

4. Vorrichtung nach einem der Ansprüche 1 bis 3, **dadurch gekennzeichnet, dass** ein Wärmetauscher (14) vorgesehen ist, der den Kondensatorkreislauf (11) mit zumindest einem Verbraucherkreislauf (15, 18, 19) verbindet.

5. Vorrichtung nach Anspruch 1 bis 4, **dadurch gekennzeichnet, dass** zumindest ein Verbraucherkreislauf (15) über Vorlauf- und Rücklaufleitungen (22a, 22b) direkt mit dem Kondensator (9b) der Wärmepumpe (9) verbunden ist.

6. Vorrichtung nach einem der Ansprüche 1 bis 5, **dadurch gekennzeichnet, dass** den Verbrauchern (16, 21, 22) Absperrventile (15a, 15b, 17a, 17b, 18a, 18b, 19a, 19b) vorgeschaltet sind.

7. Vorrichtung nach einem der Ansprüche 1 bis 6, **dadurch gekennzeichnet, dass** in der Vorlaufleitung (11a, 11a', 21a, 22a) und in der Rücklaufleitung (11b, 11b', 21b, 22b) des Kondensatorkreislaufes (11) Absperrventile (10a, 10b) zum Trennen der kondensatorseitigen Vorlauf- und Rücklaufabschnitte (11a, 11b) von den verbraucherseitigen Vorlauf- und Rücklaufabschnitten (11a', 11b', 21a, 21b, 22a, 22b) vorgesehen sind, und dass Absperrventile (6a, 6b) in der Vorlaufleitung (2a, 2a') und in der Rücklaufleitung (2b, 2b') des Verdampferkreislaufes (2) zum Trennen der absorberseitigen Vorlauf- und Rücklaufabschnitte (2a', 2b') von den verdampferseitigen Vorlauf- und Rücklaufabschnitten (2a, 2b) vorgesehen sind, wobei die verbraucherseitigen Vorlauf- und Rücklaufleitungsabschnitte (11a', 11b') des Kondensatorkreislaufes (11) über Umgehungsleitungen (23) mit den verdampferseitigen Vor- und Rücklaufleitungsabschnitten (2a, 2b) des Verdampferkreislaufes (2) der Wärmepumpe (9) verbunden sind und die kondensatorseitigen Vorlauf- und Rücklaufleitungsabschnitte (11, 11b) des k;ondensatorkreislaufes (11) über Rückkühlleitungen (24) mit den absorberseitigen Vor- und Rücklaufleitungsabschnitten (2a', 2b') des Verdampferkreislaufes (2) verbunden sind.

8. Vorrichtung nach einem der Ansprüche 1 bis 7, **dadurch gekennzeichnet, dass** zumindest eine zusätzliche Überhitzungsschutzeinrichtung vorgesehen ist, die vorzugsweise Rückkühlleitungen (24) aufweist, die mit zumindest einer zusätzlichen Vorrichtung (29), insbesondere Glykolrückkühler, zur Abwärmevernichtung verbunden sind.

9. Vorrichtung nach Anspruch 8, **dadurch gekennzeichnet, dass** als zusätzliche Überhitzungsschutzeinrichtung die verbraucherseitigen Vor- und Rücklaufleitungsabschnitte (11a', 11b') des Kondensatorkreislaufes (11) über eine zweite Bypassleitung (30) verbunden sind, wobei ein zweites Mischventil (12), insbesondere im Rücklaufleitungsabschnitt (11b'), vorgesehen ist, mit dem kälterer Wärmeträger aus dem Rücklaufleitungsabschnitt (11b') dem Vorlaufleitungsabschnitt (11a') beigemischt werden kann.

10. Vorrichtung nach einem der Ansprüche 8 oder 9, **dadurch gekennzeichnet, dass** als zusätzliche Überhitzungsschutzeinrichtung der vorzugsweise verdampferseitige Vorlaufleitungsabschnitt (2b) des Verdampferkreislaufes (2) vorzugsweise über einen Wärmetauscher (33) mit zumindest einem Verbraucher (35) verbunden ist.

11. Vorrichtung nach einem der Ansprüche 1 bis 10, **dadurch gekennzeichnet, dass** das erste und/oder zweite Mischventil (3, 12) als Zweiwegventil oder als Dreiwegventil ausgeführt ist.

12. Verfahren zur Wärmezu- und/oder -abfuhr zu Verbrauchern (16, 22, 21, 35) wie beispielsweise einem Schwimmbecken, einer Raumheizanlage und/oder Raumklimatisierungs-Anlage, mit einer Vorrichtung mit zumindest einem Solarabsorber (1) mit zumindest einem einen flüssigen Wärmeträger führenden Absorberkreislauf (1a; 1b), einer Wärmepumpe (9) und einem Verdampferkreislauf (2), der den Solarabsorber (1) mit dem Verdampfer (9a) der Wärmepumpe (9) verbindet, wobei im Verdampferkreislauf (2) eine Pumpe (5) vorgesehen ist, und wobei als Überhitzungsschutzmaßnahme der Rücklaufleitungsabschnitt (2b) des Verdampferkreislaufes (2) mit dem Vorlaufleitungsabschnitt (2a) des Verdampferkreislaufes; (2) über eine erste Bypassleitung (4) verbunden wird, und wobei über ein erstes Mischventil (3) ein kälterer Wärmeträger aus dem Rücklaufleitungsabschnitt (2b) dem Vorlaufleitungsabschnitt (2a) beigemischt werden kann, nach einem der Ansprüche 1 bis 11, **dadurch gekennzeichnet, dass** zumindest zwei getrennte Absorberkreisläufe (1a, 1b) zumindest einen Verbraucher, vorzugsweise zumindest zwei unterschiedliche Verbraucher, mit unterschiedlichen Temperaturen versorgen und dass bei hohem Wärmeangebot durch die Sonnenstrahlung der Solarkreislauf (20) durch Öffnen der Absperrventile (17a, 17b) des Solarkreislaufes (20) und bei geringem Wärmeangebot durch Sonnenstrahlung zusätzlich oder alternativ dazu der Verbraucherkreislauf (33) und/oder der Kondensatorkreislauf (11) durch Öffnen der Absperrventile (15a, 15b) zur Versorgung des Verbrauchers (16) in Betrieb geht.

13. Verfahren nach Anspruch 12, **dadurch gekennzeichnet, dass** das Mischventil (3) entsprechend der Temperatur des Wärmeträgers im Vorlaufleitungsabschnitt (2a) des Verdampferkreislaufes (2) geregelt wird.

14. Verfahren nach Anspruch 12 oder 13, **dadurch gekennzeichnet, dass** zumindest eine zusätzliche Überhitzungsschutzmaßnahme durchgeführt wird, wobei vorzugsweise die Überhitzungsschutzmaßnahme die Fördermenge der Pumpe (5) des Verdampferkreislaufes (2) mit steigender Temperatur des Wärmeträgers im Vorlaufleitungsabschnitt (2a) erhöht: wird.

15. Verfahren nach einem der Ansprüche 12 bis 14, **dadurch gekennzeichnet, dass** die Umschaltung zwischen Solarkreislauf (20) und Kondensatorkreislauf (11) von der Außentemperatur und vom Bedarf des Verbrauchers (16) geregelt wird.

16. Verfahren nach einem der Ansprüche 12 bis 15, **dadurch gekennzeichnet, dass** die Wärme einer Klimaanlage (21) über einen Kreislauf, der aus Vor- und Rücklaufleitung (21a, 21b) der Klimaanlage (21), aus verbraucherseitigen Vor- und Rücklaufleitungsabschnitten (11a', 11b'), aus Umgehungsleitungen (23) und den verdampferseitigen Vor- und Rücklaufleitungsabschnitten (2a, 2b) besteht, dem Verdampfer (9a) der Wärmepumpe (9) zugeführt wird.

17. Verfahren nach einem der Ansprüche 12 bis 16, **dadurch gekennzeichnet, dass** als zusätzliche Überhitzungsschutzmaßnahme für die Wärmepumpe (9) die Begrenzung der Kältemitteltemperatur der Wärmepumpe (9) durch Beimischung von kälterem Wärmeträger aus einem verbraucherseitigen Rücklaufleitungsabschnitt (11b') des Kondensatorkreislaufes (11) zu einem verbraucherseitigen Vorlaufleitungsabschnitt (11a') des Kondensatorkreislaufes (11) über ein zweites Mischventil (12) erfolgt, wobei vorzugsweise das zweite Mischventil (12) entsprechend der Temperatur des Wärmeträgers in dem verbraucherseitigen Vorlaufleitungsabschnitt (11a') des Kondensatorkreislaufes (11) geregelt wird.

18. Verfahren nach einem der Ansprüche 12 bis 17, **dadurch gekennzeichnet, dass** als zusätzliche Überhitzungsschutzmaßnahme die Abwärme aus der Wärmepumpe (9) über den Kreislauf, der aus den kondensatorseitigen Vorund Rücklaufleitungsabschnitten (11a, 11b) des Kondensatorkreistaufes (11), aus den Rückkühlleitungen (24), aus den absorberseitigen Vor- und Rücklaufleitungsabschnitten (2a', 2b') und dem Absorberleitungssystem (1a) und/oder dem Kreislauf (25) einer zusätzlichen Vorrichtung (29) zur Abwärmevernichtung, insbesondere einem Glykolrückkühler, besteht, abgeführt wird, wobei vorzugsweise eine Aufteilung der abzugebenden Abwärmeenergie zwischen Solarabsorber (1) und der zusätzlichen Vorrichtung (29) zur Abwärmevernichtung mittels zumindest einem in der Rückkühlleitung (24a) angeordneten Ventil (25a, 25b) und dem ersten Mischventil (3) in Abhängigkeit von der Außentemperatur und der Temperatur des Wärmeträgers in der Vorlaufleitung (24a) der Rückkühlleitung (24) geregelt wird.

19. Verfahren nach einem der Ansprüche 12 bis 18, **dadurch gekennzeichnet, dass** die Ventile (8a, 8b) in den Umgehungsleitungen (23) und die Ventile (26a, 26b) in der Verdampferleitung (2) in Abhängigkeit von Außentemperatur und/oder Zeitvorgaben und/oder dem Betriebszustand der Wärmepumpe (9) geregelt werden, wobei vorzugsweise zur Direktnutzung des Absorbers (1) bei abgeschalteter Wärmepumpe (9) der Verdampferkreislauf (2) über eine Umgehungsleitung (23) mit dem Kondensatorkreislauf (11) verbunden wird, wobei die verdampferseitige Absperrventile (26a, 26b) geschlossen und Absperrventile (8a, 8b) in der Umgehungsleitung geöffnet werden.

20. Verfahren nach einem der Ansprüche 12 bis 19, **dadurch gekennzeichnet, dass** als zusätzliche Überhitzungsschutzmaßnahme der verdampferseitige Vorlaufleitungsabschnitt (2b) des Verdampferkreislaerfes (2) vorzugsweise über einen zweiten Wärmetauscher (33) mit zumindest einem Verbraucher (35) verbunden wird.

## Claims

1. An apparatus for heat supply and/or heat removal to at least one consumer (16, 22, 21) such as a swimming pool, a room heating system and/or air-conditioning system, comprising at least one solar absorber (1) with at least one absorber circuit (1a; 1b) guiding a fluid heat carrier, a heat pump (9) and an evaporator circuit (2) which connects the solar absorber (1) with an evaporator (9a) of the heat pump (9), with a pump (5) being provided in the evaporator circuit (2), and with a return line section (2b) of the evaporator circuit (2) being connected with a flow line section (2a) of the evaporator circuit (2) via a first bypass line (4) as an overheating protection device, with a first mixing valve (3) being provided, especially in the return line section (2b) or the first bypass line (4), with which colder heat carrier can be admixed from the return line section (2b) to the flow line section (2a), **characterized in that** there are at least two separate absorber circuits (1a, 1b) which supply at least one consumer, preferably at least two different consumers, with different temperatures with different or the same heat carriers, and that an absorber circuit (1a) supplies the evaporator circuit (2) of the heat pump (9) and the other absorber circuit (1b) supplies a solar circuit (20) with directly connected consumers (16).

2. An apparatus according to claim 1, **characterized in that** the solar absorber (1) is arranged as a multiple-line absorber, preferably as a double-line absorber.

3. An apparatus according to claim 1 or 2, **characterized in that** a condenser circuit (11) connects the condenser (9b) of the heat pump (9) via at least one flow line (11a, 11a', 21a, 22a) and at least one return line (11b, 11b', 21b, 22b) with one or several consumers (16, 21, 22).

4. An apparatus according to one of the claims 1 to 3, **characterized in that** a heat exchanger (14) is provided which connects the condenser circuit (11) with at least one consumer circuit (15, 18, 19).

5. An apparatus according to claim 1 to 4, **characterized in that** at least one consumer circuit (15) is connected directly with the condenser (9b) of the heat pump (9) via flow and return lines (22a, 22b).

6. An apparatus according to one of the claims 1 to 5, **characterized in that** shut-off valves (15a, 15b, 17a, 17b, 18a, 18b, 19a, 19b) are provided upstream of the consumers (16, 21, 22).

7. An apparatus according to one of the claims 1 to 6, **characterized in that** shut-off valves (10a, 10b) for separating the condenser-side flow and return line sections (11a, 11b) from the consumer-side flow and return line sections (11a', 11b', 21a, 21b, 22a, 22b) are provided in the flow line (11a, 11a', 21a, 22a) and in the return line (11b, 11b', 21b, 22b) of the condenser circuit (11), and that shut-off valves (6a, 6b) are provided in the flow line (2a, 2a') and in the return line (2b, 2b') of the evaporator circuit (2) for separating the absorber-side flow and return line sections (2a', 2b') from the evaporator-side flow and return line sections (2a, 2b), with the consumer-side flow and return line sections (11a', 11b') of the condenser circuit (11) being connected via bypass lines (23) with the evaporator-side flow and return line sections (2a, 2b) of the evaporator circuit (2) of the heat pump (9) and the condenser-side flow and return line sections (11a, 11b) of the condenser circuit (11) being connected via return cooling lines (24) with the absorber-side flow and return line sections (2a', 2b') of the evaporator circuit (2).

8. An apparatus according to one of the claims 1 to 7, **characterized in that** at least one additional overheating protection device is provided which preferably comprises return cooling lines (24) which are connected with at least one additional apparatus (29), especially a glycol back cooler, for waste heat destruction.

9. An apparatus according to claim 8, **characterized in that** the consumer-side flow and return line sections (11a', 11b') of the condenser circuit (11) are connected via a second bypass line (30) as an additional overheating protection device, with a second mixing valve (12) being provided, especially in the return line section (11b'), with which colder heat carrier from the return line section (11b') can be admixed to the flow line section (11a').

10. An apparatus according to one of the claims 8 or 9, **characterized in that** the preferably evaporator-side flow line section (2b) of the evaporator circuit (2) is preferably connected via a heat exchanger (33) with at least one consumer (35) as an additional overheating protection device.

11. An apparatus according to one of the claims 1 to 10, **characterized in that** the first and/or second mixing valve (3, 12) is arranged as a two-way or three-way valve.

12. A method for heat supply and/or heat removal to consumers (16, 22, 21, 35) such as a swimming pool for example, a room heating system and/or air-conditioning system, comprising an apparatus with at least one solar absorber (1) with at least one absorber circuit (1a; 1b) guiding a fluid heat carrier, a heat pump (9) and an evaporator circuit (2) which connects the solar absorber (1) with the evaporator (9a) of the heat pump (9), with a pump (5) being provided in the evaporator circuit (2), and with the return line section (2b) of the evaporator circuit (2) being connected with the flow line section (2a) of the evaporator circuit (2) via a first bypass line (4) as an overheating protection measure, and with a colder heat carrier being admixible via a first mixing valve (3) from the return line section (2b) to the flow line section (2a), according to one of the claims 1 to 11, **characterized in that** at least two separate absorber circuits (1a, 1b) supply at least one consumer, preferably at least two different consumers, with different temperatures, and that at a high supply of heat by the solar radiation the solar circuit (20) is put into operation for supplying the consumer (16) by opening the shut-off valves (17a, 17b) of the solar circuit (20) and at a low supply of heat by the solar radiation the consumer circuit (33) and/or the condenser circuit (11) is put into operation in addition or as an alternative thereto by opening the shut-off valves (15a, 15b) for supplying the consumer (16).

13. A method according to claim 12, **characterized in that** the mixing valve (3) is controlled according to the temperature of the heat carrier in the flow line section (2a) of the evaporator circuit (2).

14. A method according to claim 12 or 13, **characterized in that** at least one additional overheating protective measure is performed, with preferably the conveyed quantity of the pump (5) of the evaporator circuit (2) being increased with rising temperature of the heat carrier in the flow line section (2a) as an overheating protection measure.

15. A method according to one of the claims 12 to 14, **characterized in that** the changeover between solar circuit (20) and condenser circuit (11) is controlled by the outside temperature and the demand of the consumer (16).

16. A method according to one of the claims 12 to 15, **characterized in that** the heat of an air-conditioning system (21) is supplied to the evaporator (9a) of the heat pump (9) via a circuit which consists of the flow and return line (21a, 21b) of the air-conditioning system (21), the flow and return line sections (11a', 11b') on the consumer side, bypass lines (23) and the flow and return line sections (2a, 2b) on the evaporator side.

17. A method according to one of the claims 12 to 16, **characterized in that** as an additional overheating protection measure for the heat pump (9) the limitation of the cooling agent temperature of the heat pump (9) is made by adding colder heat carrier from a consumer-side return line section (11b') of the condenser circuit (11) to a consumer-side flow line section 11la') of the condenser circuit (11) via a second mixing valve (12), with preferably the second mixing valve (12) being controlled according to the temperature of the heat carrier in the consumer-side flow line section (11a') of the condenser circuit (11).

18. A method according to one of the claims 12 to 17, **characterized in that** as an additional overheating measure the waste heat is discharged from the heat pump (9) via the circuit which consists of the condenser-side flow and return line sections (11a, 11b) of the condenser circuit (11), the return cooling lines (24), the absorber-side flow and return line sections (2a', 2b') and the absorber line system (1a) and/or the circuit (25) of an additional apparatus (29) for destroying waste heat, especially a glycol back cooler, with preferably a division of the waste heat energy to be emitted between solar absorber (1) and the additional apparatus (29) for destroying waste heat being controlled by means of at least one valve (25a, 25b) disposed in the return cooling line (24a) and the first mixing valve (3) depending on the outside temperature and the temperature of the heat carrier in the flow line (24a) of the return cooling line (24).

19. A method according to one of the claims 12 to 18, **characterized in that** the valves (8a, 8b) in the bypass lines (23) and the valves (26a, 26b) in the evaporator line (2) are controlled depending on outside temperature and/or time defaults and/or the operating state of the heat pump (9), with the evaporator circuit (2) being connected via a bypass line (23) with the condenser circuit (11) preferably for direct utilization of the absorber (1) when the heat pump (9) is switched off, with the shut-off valves (26a, 26b) on the evaporator side being closed and the shut-off valves (8a, 8b) in the bypass line being opened.

20. A method according to one of the claims 12 to 19, **characterized in that** the evaporator-side flow line section (2b) of the evaporator circuit (2) is connected preferably via a second heat exchanger (33) with at least one consumer (35) as an additional overheating protection measure.

## Revendications

1. Dispositif pour assurer l'alimentation et/ou l'évacuation de chaleur d'un utilisateur (16, 22, 21) tel que par exemple une piscine, une installation de chauffage de locaux et/ou une installation climatisation de locaux, comprenant :
- au moins un absorbeur solaire (1) ayant un circuit absorbeur (1a, 1b) pour un fluide caloporteur,
- une pompe à chaleur (9) et un circuit d'évaporateur (2) reliant l'absorbeur solaire (1) à un évaporateur (9a) de la pompe à chaleur (9),
le circuit (2) d'évaporateur comporte une pompe (5) et
une installation de protection contre la surchauffe est réalisée par une segment de conduite de retour (2b) du circuit d'évaporateur (2) au segment de conduite aller (2a) du circuit d'évaporateur (2) en passant par une première conduite de dérivation (4),
une première vanne mélangeuse (3) étant prévue en particulier dans le segment de conduite de retour (2b) ou de la première conduite de dérivation (4) pour permettre de mélanger du fluide caloporteur plus froid provenant du segment de conduite de retour (2b) au segment de conduite aller (2a),
**caractérisé par**
au moins deux circuits absorbeurs (1a, 1b), séparés, qui alimentent, avec des fluides caloporteurs différents ou identiques, au moins un utilisateur, de préférence au moins deux utilisateurs différents, pour des températures différentes et
un circuit absorbeur (1a) alimente le circuit d'évaporateur (2) de la pompe à chaleur (9) et l'autre circuit absorbeur (1b) alimente un circuit solaire (20) avec des utilisateurs (16) branchés directement.

2. Dispositif selon la revendication 1,
**caractérisé en ce que**
l'absorbeur solaire (1) est un absorbeur à conduits multiples, de préférence un absorbeur à deux conduites.

3. Dispositif selon la revendication 1 ou 2,
**caractérisé par**
un circuit de condenseur (11) reliant le condenseur (9b) de la pompe à chaleur (9) par au moins une conduite aller (11a, 11a' ; 21a, 22a) et au moins une conduite retour (11b, 11b' ; 21 b, 22b) à un ou plusieurs utilisateurs (16, 21, 22).

4. Dispositif selon l'une des revendications 1 à 3,
**caractérisé par**
un échangeur de chaleur (14) reliant le circuit de condenseur (11) à au moins un circuit d'utilisateur (15, 18, 19).

5. Dispositif selon les revendications 1 à 4,
**caractérisé en ce qu'**
au moins un circuit d'utilisateur (15) est relié par des conduites aller et des conduites retour (22a, 22b) directement au condenseur (9b) de la pompe à chaleur (9).

6. Dispositif selon l'une des revendications 1 à 5,
**caractérisé par**
des vannes d'arrêt (15a, 15b ; 17a, 17b ; 18a, 18b ; 19a, 19b) installées en amont des utilisateurs (16, 21, 22).

7. Dispositif selon l'une des revendications 1 à 6,
**caractérisé en ce que**
la conduite aller (11a, 11a' ; 21a, 22a) et la conduite retour (11b, 11b'; 21b, 22b) du circuit de condenseur (11) comportent des vannes d'arrêt (10a, 10b) pour couper les segments de conduite aller et retour (11a, 11b) côté condenseur, par rapport aux segments de conduite aller et retour (11a', 11b' ; 21a, 21b ; 22a, 22b) côté utilisateur et
des vannes d'arrêt (6a, 6b) sont prévues dans la conduite aller (2a, 2a') et dans la conduite retour (2b, 2b') du circuit d'évaporateur (2) pour séparer les segments de conduite aller et retour (2a', 2b') côté absorbeur par rapport aux segments de conduite aller et retour (2a, 2b) côté évaporateur,
les segments de conduite aller et retour (11a', 11b') côté utilisateur du circuit de condenseur (11) sont reliés par des conduites de dérivation (23) aux segments de conduite aller et retour (2a, 2b) côté évaporateur du circuit d'évaporateur (2) de la pompe à chaleur (9) et les segments de conduite aller et retour (11a, 11b) côté condenseur du circuit de condenseur (11) sont reliés par des conduites de retour de refroidissement (24) aux segments de conduite aller et retour (2a', 2b') absorbants et faisant partie du circuit d'évaporateur (2).

8. Dispositif selon l'une des revendications 1 à 7,
**caractérisé par**
au moins une installation de protection de surchauffe supplémentaire, comportant de préférence des conduites de refroidissement de retour (24), reliées à au moins un dispositif (29) supplémentaire, notamment un radiateur à glycol pour absorber de la chaleur.

9. Dispositif selon la revendication 8,
**caractérisé en ce que**
comme installation de protection supplémentaire contre la surchauffe, les segments de conduite aller et retour (11a', 11b') côté utilisateur du circuit de condenseur (11) sont reliés par une seconde conduite de dérivation (30),
une seconde vanne mélangeuse (12) étant prévue notamment dans le segment de conduite retour (11b') pour permettre de mélanger du fluide caloporteur plus froid provenant du segment de conduite retour (11b') au segment de conduite aller (11a') .

10. Dispositif selon l'une des revendications 8 ou 9,
**caractérisé en ce que**
comme installation de protection supplémentaire contre la surchauffe, le segment de conduite aller, de préférence du côté évaporateur (2b) du circuit d'évaporateur (2), est relié de préférence par un échangeur de chaleur (33) à au moins un utilisateur (35).

11. Dispositif selon l'une des revendications 1 à 10,
**caractérisé en ce que**
la première et/ou la seconde vanne mélangeuse (3, 12) sont des vannes à deux voies ou des vannes à trois voies.

12. Procédé de fourniture et/ou d'évacuation de chaleur pour des utilisateurs (16, 22, 21, 35) comme par exemple une piscine, une installation de chauffage de locaux et/ou une installation de climatisation de locaux, comprenant un dispositif ayant au moins un absorbeur solaire (1) avec au moins un circuit d'absorbeur (1a, 1b) traversé par un fluide caloporteur, une pompe à chaleur (9) et un circuit d'évaporateur (2) qui relie l'absorbeur solaire (1) à l'évaporateur (9a) de la pompe à chaleur (9), le circuit d'évaporateur (2) étant équipé d'une pompe (5) et
le moyen de protection contre la surchauffe du segment de conduite retour (2b) du circuit d'évaporateur (2) est relié au segment de conduite aller (2a) du circuit d'évaporateur (2) par une première conduite de dérivation (4) et
une première vanne mélangeuse (3) permet de mélanger du fluide caloporteur plus froid provenant du segment de conduite retour (2b) au segment de conduite aller (2a), selon l'une des revendications 1 à 11,
**caractérisé en ce qu'**
au moins deux circuits absorbeurs (1a, 1b) distincts alimentent au moins un utilisateur, de préférence au moins deux utilisateurs différents pour des températures différentes et
pour une offre thermique élevée par rayonnement solaire, le circuit solaire (20) est mis en route par l'ouverture des vannes d'arrêt (17a, 17b) du circuit solaire (20) et pour une offre de chaleur plus faible par rayonnement solaire, en plus ou en variante, le circuit d'utilisateur (33) et/ou le circuit de condenseur (11) sont mis en marche par l'ouverture de la vanne d'arrêt (15a, 15b) pour assurer l'alimentation de l'utilisateur (16).

13. Procédé selon la revendication 12,
**caractérisé en ce qu'**
on règle la vanne mélangeuse (3), en fonction de la température du fluide caloporteur dans le segment de conduite amont (2a) du circuit de vapeur (2).

14. Procédé selon la revendication 12 ou 13,
**caractérisé en ce qu'**
on applique au moins une mesure supplémentaire de protection contre la surchauffe de préférence, la mesure de protection contre la surchauffe augmente le débit de la pompe (5) du circuit d'évaporateur (2) avec une température croissante du fluide caloporteur dans le segment de conduite amont (2a).

15. Procédé selon l'une des revendications 12 à 14,
**caractérisé en ce qu'**
on règle la commutation entre le circuit solaire (20) et le circuit de condenseur (11) à l'aide de la température extérieure et selon la demande de l'utilisateur (16).

16. Procédé selon l'une des revendications 12 à 15,
**caractérisé en ce qu'**
on fournit la chaleur d'une installation de climatisation (21) par un circuit composé de la conduite aller et de la conduite retour (21a, 21b) de l'installation de climatisation (21), de segments de conduite aller et retour (11a, 11b') côté utilisateur, de conduites de dérivation (23) et de segments de conduite aller et retour (2a, 2b) côté évaporateur, vers l'évaporateur (9a) de la pompe à chaleur (9).

17. Procédé selon l'une des revendications 12 à 16,
**caractérisé en ce que**
comme moyen supplémentaire de protection contre la surchauffe de la pompe à chaleur (9), on limite la température du fluide calorifique de la pompe à chaleur (9) en mélangeant du fluide caloporteur plus frais provenant du segment de conduite retour (11b') côté utilisateur du circuit de condenseur (11) à un segment de conduite aller (11a') côté utilisateur du circuit de condenseur (11) avec une seconde vanne mélangeuse (12), de préférence la seconde vanne mélangeuse (12) est régulée en fonction de la température du fluide caloporteur dans le segment de conduite aller (11a') côté utilisateur du circuit de condenseur (11).

18. Procédé selon l'une des revendications 12 à 17,
**caractérisé en ce que**
comme moyen supplémentaire de protection contre la surchauffe, on évacue la chaleur dégagée par la pompe à chaleur (9) par le circuit composé des segments de conduite aller et retour (11a, 11b) côté condenseur dans le circuit de condenseur (11), des conduites de refroidissement de retour (24), des segments de conduite aller et retour (2a', 2b') côté absorbeur et du système de conduite d'absorbeur (1a) et/ou du circuit (25) d'un dispositif supplémentaire (29) pour évacuer la chaleur, notamment un radiateur à glycol, et
de préférence, on régule la répartition de l'énergie calorifique à évacuer entre l'absorbeur solaire (1) et le dispositif supplémentaire (29) pour absorber la chaleur à évacuer à l'aide d'au moins une vanne (25a, 25b) installée dans la conduite de refroidissement de retour (24a) et la première vanne mélangeuse (3) en fonction de la température extérieure et de la température du fluide caloporteur dans la conduite aller (24a) de la conduite de refroidissement de retour (24).

19. Procédé selon l'une des revendications 12 à 18,
**caractérisé en ce qu'**
on régule les vannes (8a, 8b) des conduites de dérivation (23) et les vannes (26a, 26b) dans la conduite d'évaporateur (2) en fonction de la température extérieure et/ou des consignes de temps et/ou de l'état de fonctionnement de la pompe à chaleur (9),
de préférence pour l'utilisation directe de l'absorbeur (1) lorsque la pompe à chaleur (9) est arrêtée, on relie le circuit d'évaporateur (2) par une conduite de dérivation (23) au circuit de condenseur (11),
les vannes d'arrêt (26a, 26b) côté évaporateur étant fermées et les vannes d'arrêt (8a, 8b) de la conduite de dérivation étant ouvertes.

20. Procédé selon l'une des revendications 12 à 19,
**caractérisé en ce que**
comme moyen supplémentaire de protection contre la surchauffe, on relie le segment de conduite aller (2b) côté évaporateur du circuit d'évaporateur (2) de préférence par l'intermédiaire d'un second échangeur de chaleur (33) à au moins un utilisateur (35).
